(19) Europäisches Patentamt
European Patent Office
Office européen des brevets

(11) **EP 4 507 290 A1**

(12) **EUROPEAN PATENT APPLICATION**
published in accordance with Art. 153(4) EPC

(43) Date of publication:
**12.02.2025 Bulletin 2025/07**

(21) Application number: **23869309.7**

(22) Date of filing: **01.08.2023**

(51) International Patent Classification (IPC):
**H04N 5/222** (2006.01)    **H04N 5/268** (2006.01)
**H04N 23/69** (2023.01)

(52) Cooperative Patent Classification (CPC):
**H04N 5/222; H04N 5/268; H04N 23/69**

(86) International application number:
**PCT/JP2023/028050**

(87) International publication number:
**WO 2024/070196 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 JP 2022154627**

(71) Applicant: Unixon Systems Co., Ltd.
**Fukuoka-shi, Fukuoka 810-0062 (JP)**

(72) Inventors:
• **ENOMOTO Haruka
Fukuoka-shi, Fukuoka 810-0062 (JP)**
• **SUYAMA Yoshinori
Fukuoka-shi, Fukuoka 810-0062 (JP)**

(74) Representative: **Isarpatent
Patent- und Rechtsanwälte
Barth Hassa Peckmann & Partner mbB
Friedrichstraße 31
80801 München (DE)**

(54) **IMAGING SYSTEM, IMAGING PROGRAM, AND IMAGING METHOD**

(57)    An object is to provide an imaging system, an imaging program, and an imaging method capable of automatically switching between videos captured by a plurality of cameras and constantly outputting a best angle video to viewers. An imaging system 1 is a system that automatically performs switching work of a plurality of imaging devices 10 installed in a sports stadium, and includes a switching determination unit 20, a control unit, 30, and an output unit 40. The switching determination unit 20 selects an imaging device 10 that outputs a best angle video from a plurality of videos captured by the imaging devices 10. The control unit 30 instructs the selected imaging device 10 to perform such camera work that provides an optimum screen size, and the best angle video can be constantly output to the viewers.

Fig. 1

## Description

Technical Field

The present invention relates to an imaging system, an imaging program, and an imaging method. Specifically, the present invention relates to an imaging system, an imaging program, and an imaging method capable of automatically switching between videos captured by a plurality of cameras and constantly outputting a best angle video to viewers.

Related Art

In shooting of a sports relay broadcast, etc., a plurality of cameras are arranged at various places in a game venue in order to shoot a competitor or a ball moving around on a court from various directions. An operator then switches between the cameras using a switcher, whereupon processing such as selecting a video that is likely to be the most interesting to the viewers depending on the game situation and transmitting the video via a broadcast wave or recording the video on a recorder is performed.

In conventional sports program production, switching work is performed manually by an operator, which requires human costs. Further, the operator always needs to check the video captured by each camera for the duration of the sports relay broadcast, so that the workload is large and the operator needs to be familiar with the rules of the sport and the presentation of the broadcast program.

Accordingly, as an invention in which the switching work (switching of the switcher) is performed without manual operation, a technology is known that determines who is speaking and identifies what is being said based on speech information and appropriately switches between the videos (see, for example, Patent Literature 1).

Citation List

Patent Literature

Patent Literature 1: Japanese Laid-open No. 2005-295431

SUMMARY OF INVENTION

Problem to Be Solved by Invention

However, the technology disclosed in Patent Literature 1 described above performs the switching work based on the speech information, and is suitable for programs that are directed based on the remarks of participants such as talk shows and information programs, but no consideration is given to its application to a sports relay broadcast in which the positional relationship of athletes affects the direction of the program.

The present invention has been made in view of the foregoing points, and an object thereof is to provide an imaging system, an imaging program, and an imaging method capable of automatically switching between videos captured by a plurality of cameras and constantly outputting a best angle video to viewers.

Means for Solving Problem

In order to achieve the foregoing object, an imaging device of the present invention includes a plurality of imaging devices that image the same subject from different viewpoints at the same timing, a switching determination unit that determines a best angle from among videos captured by the plurality of imaging devices and selects an imaging device that outputs a video of the best angle, a control unit that instructs the imaging device selected by the switching determination unit to execute at least one of control processings of zoom-out processing from the subject, zoom-in processing to the subject, tracking processing of the subject, and maintenance processing of maintaining a previous screen size, and an output unit that outputs a video captured by the imaging device controlled based on the control processing by the control unit.

Here, by including a plurality of imaging devices that image the same subject from different viewpoints at the same timing, in a sports relay broadcast, for example, the competition situation of the competitor can be imaged from all viewpoints, and the progress of the competition can be transmitted to the viewers in an easy-to-understand manner by outputting the videos from these different viewpoints.

Further, by including the switching determination unit that determines the best angle from among the videos captured by the plurality of imaging devices and selects an imaging device that outputs the best angle video, a video that can most effectively convey the progress of the competition to the viewers can be automatically determined from among the plurality of videos based on an objective determination rather than an subjective determination by the operator. Further, there is no need to assign an operator who performs the switching work, so that efficient switching work can be realized.

Further, by including the control unit that instructs the imaging device selected by the switching determination unit to execute at least one of the control processings of the zoom-out processing from the subject, the zoom-in processing to the subject, the tracking processing of the subject, and the maintenance processing of maintaining the previous screen size, the screen size change processing (the zoom-out processing from the subject, the zoom-in processing to the subject, or the tracking processing of the subject) or the maintenance processing according to the situation of the subject is performed immediately after switching from the current video to a video of a different viewpoint by the switching determination unit. Thus, the most effective video processing can be performed according to the situation of the subject and a realistic video can be output to the viewers.

Further, by including the output unit that outputs the video captured by the imaging device controlled based on the control processing by the control unit, the best angle video subjected to a predetermined video processing can be constantly output to the viewers.

Further, the switching determination unit includes a detection unit that uses a plurality of moving bodies competing in a stadium as subjects and detects each of the subjects as a rectangle surrounding each of the subjects from each frame image of the video obtained by the imaging device, so that the moving bodies (including people, animals, automobiles, etc.) competing in the stadium can be detected and regions surrounding predetermined ranges of the detected moving bodies can be specified.

Further, when the switching determination unit has an inter-rectangle distance measurement unit that measures an inter-rectangle distance, which is a distance between center coordinates of the rectangles of the moving bodies that are the subjects detected by the detection unit, and determines the best angle based on the inter-rectangle distance, in a competition such as a combat sport, for example, a video of an angle in which two competing athletes appear side by side as much as possible can be determined to be the best angle. As a result, a video in which one athlete is obstructed due to the athletes overlapping with each other is excluded from the best angle, and a video in which the entire movements of both athletes can be grasped can be constantly output to the viewers.

Further, when the detection unit detects at least two athletes competing in a stadium and at least one referee giving a decision for establishing the competition of the athletes as the subjects, the best angle can be selected based on the positional relationship between the athletes and the referee by detecting the competing athletes and the referee for establishing the competition as the subjects.

Further, when the switching determination unit determines, as the best angle, a video in which the inter-rectangle distance measured by the inter-rectangle distance measurement unit is the longest from among videos in which the athletes and the referee do not overlap with each other or videos in which the athletes are positioned in front of the referee, a video in which the athlete(s) is/are obstructed by the presence of the referee is excluded from the best angle, and a video in which the athletes are side by side as much as possible can be selected as the best angle from among the remaining videos. Therefore, in consideration of the position of the referee, the video in which the entire movements of both athletes can be grasped can be constantly output to the viewers.

Further, when the detection unit has a uniform color determination unit that determines uniform colors of the athletes in a frame image based on color information and detects a specific person from among the subjects based on a determination result by the uniform color determination unit, the uniform colors of the athletes or the referee are registered in advance and the subject matching the registered uniform color can be easily detected as the athlete or the referee as the specific person.

Further, when the detection unit has a moving body detection unit that identifies a subject by the background subtraction method or the frame subtraction method and detects the subject identified by the moving body detection unit as a rectangle surrounding the subject, in a sports relay broadcast, for example, the background included in the frame image obtained from the video during the game is extracted based on a known algorithm, and the athlete or the referee as the subject can be easily detected from the difference.

When the zoom-in processing and the zoom-out processing by the control unit are configured such that when the ratio of the width of the rectangle of the subject detected by the detection unit to the width of a specific frame is larger than a value defined by a predetermined first threshold function, the zoom-in processing is performed and when the ratio is smaller than a value defined by a predetermined second threshold function, the zoom-out processing is performed, the zoom-in processing or the zoom-out processing is performed according to the ratio of the width of the rectangle of the subject to the width of the screen frame. Therefore, a video in which the entire subject can be grasped can be constantly output to the viewers immediately after switching to the video selected by the switching determination unit.

Further, when the tracking processing by the control unit is configured such that tracking is performed at a constant speed or at a constant acceleration so that a midpoint connecting respective center coordinates of one of the rectangles of the subjects detected by the detection unit and the other rectangle substantially coincides with the center of the frame image, the tracking processing can be performed so that at least two athletes detected as the subjects are constantly positioned at the center of the screen frame.

In order to achieve the foregoing object, an imaging program of the present invention causes a computer to execute a step of receiving a plurality of videos of the same subject imaged from different viewpoints at the same timing, a step of determining a best angle from among the plurality of videos and selecting an imaging device that outputs a video of the best angle, a step of instructing the imaging device that outputs the best angle video to execute at least one of control processings of zoom-out processing from the subject, zoom-in processing to the subject, tracking processing of the subject, and maintenance processing of maintaining a previous screen size, and a step of outputting a video captured by the imaging device controlled based on the control processing.

Here, by including the step of receiving a plurality of videos of the same subject imaged from different viewpoints at the same timing, in a sports relay broadcast, for example, a plurality of videos of the competition situation of the competitor imaged from all viewpoints can be received.

Further, by including the step of determining the best angle from among the plurality of videos and selecting an imaging device that outputs the best angle video, the best angle can be determined from among the plurality of received videos captured from the different viewpoints based on a predetermined determination condition.

Further, by including the step of instructing the imaging device that outputs the best angle video to execute one of the control processings of the zoom-out processing from the subject, the zoom-in processing to the subject, the tracking processing of the subject, and the maintenance processing of maintaining the previous screen size, the screen size change processing or the maintenance processing according to the situation of the subject is performed immediately after switching from the current video to a video of a different viewpoint. Thus, the most effective video processing can be performed according to the situation of the subject and a realistic video can be output to the viewers.

Further, by including the step of outputting the video captured by the imaging device controlled based on the control processing, the best angle video subjected to a predetermined video processing can be constantly output to the viewers.

Further, the step of selecting an imaging device that outputs the best angle video includes a step of using a plurality of moving bodies competing in a stadium as subjects and detecting each of the subjects as a rectangle surrounding each of the subjects from each frame image of the video obtained by the imaging device, so that the moving bodies (including people, animals, automobiles, etc.) competing in the stadium can be detected from among the subjects, and regions surrounding predetermined ranges of the detected moving bodies can be specified.

Further, by including a step of measuring an inter-rectangle distance, which is a distance between center coordinates of the rectangles of the moving bodies that are the subjects, and a step of determining, as the best angle, a video in which the inter-rectangle distance is the longest, in a competition such as a combat sport, for example, a video of an angle in which two competing athletes appear side by side as much as possible can be determined to be the best angle. As a result, a video in which one athlete is obstructed due to the athletes overlapping with each other is excluded from the best angle, and a video in which the entire movements of both athletes can be grasped can be constantly output to the viewers.

Further, when the step of selecting an imaging device that outputs the best angle video further includes a step of detecting at least two athletes competing in a stadium and at least one referee giving a decision for establishing the competition of the athletes as the subjects, the best angle can be selected based on the positional relationship between the athletes and the referee by detecting the athletes competing in the stadium and the referee as the subjects.

Further, when the step of determining, as the best angle, a video in which the inter-rectangle distance is the longest includes a step of determining, as the best angle, a video in which the inter-rectangle distance is the longest from among videos in which the athletes and the referee do not overlap with each other or videos in which the athletes are positioned in front of the referee, the video in which the athlete(s) is/are obstructed by the presence of the referee is excluded from the best angle, and a video in which the athletes are side by side as much as possible can be selected as the best angle from among the remaining videos. Therefore, in consideration of the position of the referee, the video in which the entire movements of both athletes can be grasped can be constantly output to the viewers.

Further, when the step of detecting each of at least two athletes competing in a stadium as a rectangle surrounding each of the athletes includes a step of determining uniform colors of the athletes in a frame image based on predetermined color information and a step of performing noise processing on the frame image by morphological transformation, the uniform colors of the athletes are registered in advance and a subject matching the registered uniform color can be easily determined to be the athlete as the detection target.

Further, when the step of detecting the referee giving a decision for establishing the competition of the athletes includes a step of gray-scaling the frame image and a step of performing noise processing on the frame image by morphological transformation, the referee as the subject can be easily detected from the frame image by gray-scaling the frame image since the uniform of the referee is generally monochrome with white or black as the base color.

In order to achieve the foregoing object, an imaging method of the present invention includes a step of receiving a plurality of videos of the same subject imaged from different viewpoints at the same timing by imaging devices arranged at different positions, a step of determining a best angle from among the plurality of videos and selecting an imaging device that outputs a video of the best angle, a step of instructing the imaging device that outputs the best angle video to execute at least one of control processings of zoom-out processing from the subject, zoom-in processing to the subject, tracking processing of the subject, and maintenance processing of maintaining a previous screen size, and a step of outputting a video captured by the imaging device controlled based on the control processing.

Through the foregoing steps, a video to be the best angle can be selected and output from among the videos captured at the different viewpoints.

Effects of Invention

The imaging system, the imaging program, and the imaging method according to the present invention can automatically switch between videos captured by a plurality of cameras and constantly output a best angle video to viewers.

BRIEF DESCRIPTION OF DRAWINGS

[FIG. 1] is a diagram showing an overall configuration of an imaging system according to an embodiment of the present invention.
[FIG. 2] is a chart showing a processing flow in a detection unit.
[FIG. 3] is a diagram showing processing steps of moving body detection using the background subtraction method.
[FIG. 4] is a chart showing a processing flow in an inter-rectangle distance measurement unit.
[FIG. 5] is a chart showing a processing flow in a control unit.

DESCRIPTION OF EMBODIMENTS

Hereinafter, an embodiment of the present invention relating to an imaging system, an imaging program, and an imaging method will be described with reference to the drawings and provided for understanding of the present invention.

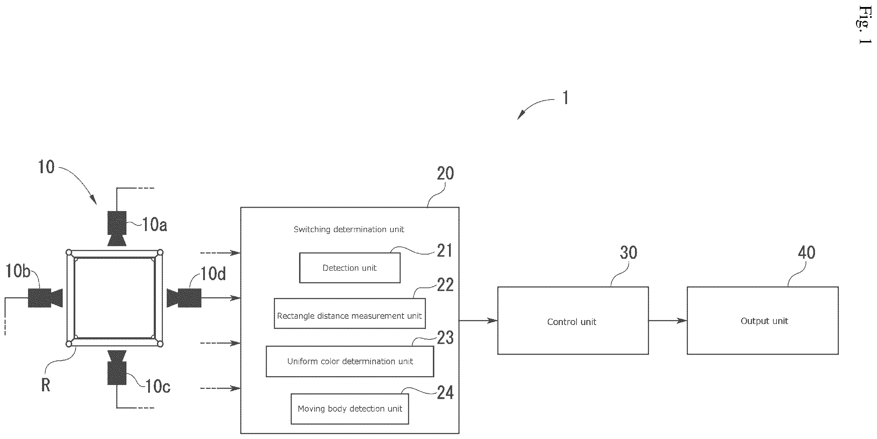

First, an overall configuration of an imaging system 1 according to an embodiment of the present invention will be described with reference to FIG. 1. The imaging system 1 according to an embodiment of the present invention is applied to a live commentary broadcast of combat sports such as boxing as a sports relay broadcast, for example. The imaging system 1 is mainly composed of a plurality of imaging devices 10 imaging a subject (a fighting boxer) from different viewpoints, a switching determination unit 20 selecting a best angle video from among videos output from the imaging devices 10, a control unit 30 instructing a predetermined image processing on the video selected by the switching determination unit 20, and an output unit 40 for outputting the video to the outside.

1 Imaging Device

The imaging device 10 is a digital video camera capable of capturing a still image and a moving image. Since the imaging device 10 has a known structure, detailed description thereof is omitted, but the imaging device 10 is mainly composed of a lens, a diaphragm, a liquid crystal ND filter (transmittance adjustment unit), and an image sensor, and includes an image display unit that displays the captured video or an image storage unit that temporarily stores the captured video.

The lens includes various kinds of lenses such as a zoom lens and a focus lens, and forms an image of subject light on an exposure surface of the image sensor by these lenses. The diaphragm is configured to be capable of mechanically adjusting the amount of subject light by adjusting its aperture. The lens and the diaphragm can control the zoom lens, the focus lens, or the diaphragm position, or control the aperture of the diaphragm, in response to an instruction from a lens driver, for example.

The liquid crystal ND filter is configured to be capable of adjusting the transmittance (adjusting the density) of light according to an applied voltage, and adjusts the amount of subject light incident on the image sensor by adjusting the transmittance according to the applied voltage.

The image sensor is composed of a complementary metal oxide semiconductor (CMOS) sensor, a charge coupled device (CCD) sensor, or the like. The image sensor captures an image by exposing subject light having been transmitted through the liquid crystal ND filter and entered. Specifically, the image sensor has a plurality of pixels (R pixels, G pixels, and B pixels), converts the subject light incident on the exposure surface into an electronic signal for each pixel by photoelectric conversion, and outputs the resulting three primary color signals (R, G, B) as analog image data.

The configuration of the imaging device 10 has been described above, and a plurality of imaging devices 10 are installed around a ring in a stadium where a match of a combat sport (boxing in the embodiment of the present invention) takes place. Specifically, one imaging device on every side, that is, at least four imaging devices 10a, 10b, 10c, and 10d are arranged around a square ring R installed in a boxing stadium. The four imaging devices 10a, 10b, 10c, and 10d can image boxers fighting on the ring R from different viewpoints.

Note that the number of the imaging devices 10 is not necessarily limited to four, and as long as videos from different viewpoints can be obtained, the number of the imaging devices 10 is not particularly limited. Further, in a live commentary broadcast of soccer, baseball, or the like as the sports relay broadcast, in order to obtain videos from different viewpoints in a large stadium, the imaging devices 10 need to be installed at all positions in the stadium. In this case, at least four or more imaging devices 10 are installed.

2 Switching Determination Unit

The switching determination unit 20 has a function of selecting an imaging device 10 that captures the best angle video from among the videos at different viewpoints output from the imaging devices 10, and is composed of a detection unit 21, an inter-rectangle distance measurement unit 22, a uniform color determination unit 23, and a moving body detection unit 24.

The detection unit 21 has a function of detecting persons (boxers fighting in the stadium and a referee giving a decision for establishing the competition of the boxers), which are subjects, from the videos captured by the imaging devices 10, and detection processing is performed on the videos output from the imaging devices 10 for each certain frame. Specifically, a frame image is extracted every five frames from the videos output from the imaging devices 10, and person detection by the detection unit 21 is performed on the extracted frame image.

Here, the person detection by the detection unit 21 does not necessarily have to be performed based on the frame image for every five frames, and the timing at which the detection processing is performed can be changed as appropriate.

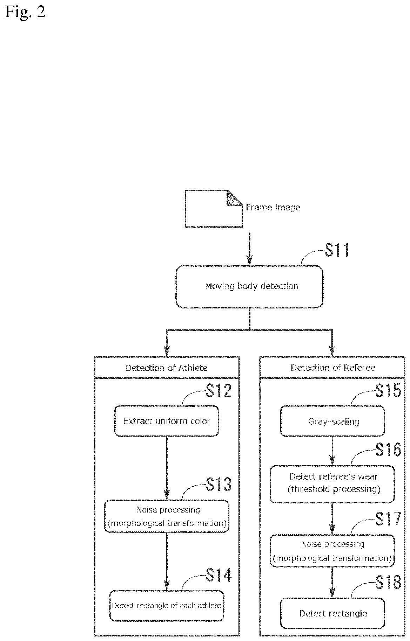

The person detection in the detection unit 21 will be described with reference to the processing flow of FIG. 2. First, a frame image in a specific frame unit is selected from the videos output from the imaging devices 10, and moving body (person) detection is performed by the moving body detection unit 24 (S11). Moving bodies (persons including the boxers, the referee, and spectators) are detected from the video in the frame image by the moving body detection unit 24.

At this time, once moving bodies are detected, the detection result is temporarily stored in the storage unit. If no moving body can be detected by the moving body detection unit 24, the past detection result temporarily stored in the storage unit is read out and used for subsequent processing. Note that the range of the past detection result that can be reused in this case can be arbitrarily set, and in the embodiment of the present invention, it is set to two seconds.

The moving body detection by the moving body detection unit 24 is performed on the selected frame image based on the background subtraction method. The background subtraction method is a known image processing method for extracting a target object by obtaining a difference between two frame images captured at the same position at different times, for example, in the present and the past. In the embodiment of the present invention, based on a known background subtraction algorithm, the background included in a frame image G obtained from the videos in the match is extracted and the persons as the moving bodies are identified from the difference.

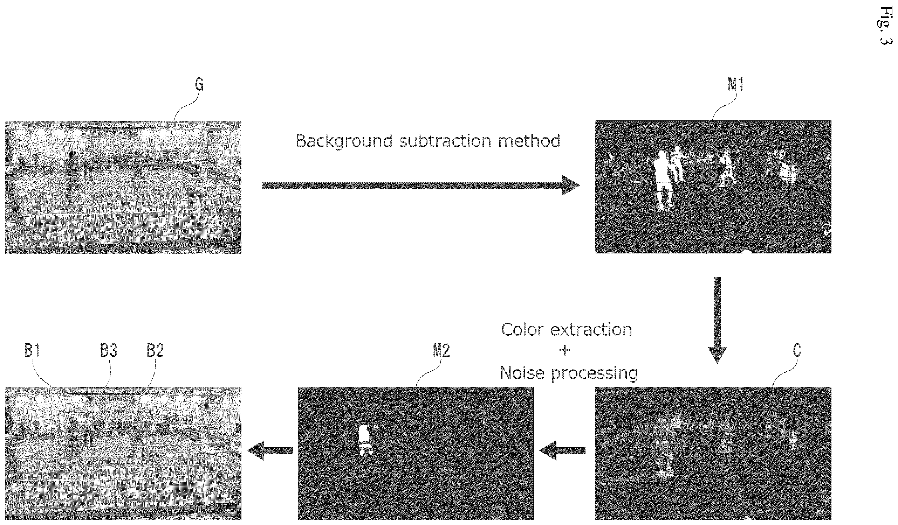

FIG. 3 is a diagram showing a process of performing moving body detection from the frame image G using the background subtraction method. As shown in FIG. 3, when moving body detection is performed from the frame image G using the background subtraction method, a binary first mask image M1 in which the moving bodies (the boxers, the referee, and the spectators) are represented in white and the other portions are represented in black is obtained from the frame image G.

From the first mask image M1, person detection of the boxers and the referee excluding the spectators is further performed. First, in the detection of the boxers, a color image C in which the white portions of the first mask image M1 are colored is generated based on the frame image G, and detection of the colors of the uniforms worn by the boxers is performed from the obtained color image C (S12).

In the detection of the uniform colors, colors of wearable uniforms as stipulated in boxing competition rules, for example, are registered in advance in the uniform color determination unit 23, and the colors of the uniforms worn by the boxers are extracted from the color image C, and the extracted colors of the uniforms are compared with the uniform colors registered in the uniform color determination unit 23, and each of the fighting boxers is identified from the color image C.

In the color image C, there is a lot of noise at a boundary portion between a black mask region, which is a background region, and the person, which is the subject, and this makes the range of the subject unclear. Therefore, in order to make the boundary between the subject and the mask region clearer, known noise processing such as morphological transformation, filtering processing, or bilateral filter is performed to remove the noise existing at the boundary between the mask region and the subject (S13).

If one of the two fighting boxers can be detected after the noise processing, a binary second mask image M2 in which the detected boxer is in white and the other persons and the background are in black is obtained. A rectangle surrounding the entire white portion of the second mask image M2 is then defined, and one boxer can be detected as a first rectangle B1 from the second mask image M2. By applying the above processing to the other boxer, who is the opponent, the other boxer is detected as a second rectangle B2 from the second mask image M2 (S14).

Note that when the fighting boxers are respectively defined as the first rectangle B1 and the second rectangle B2, a third rectangle B3 surrounding the first rectangle B1 and the second rectangle B2 can also be defined. The third rectangle B3 is used in control processing in the control unit 30 described later.

After detecting the fighting boxers, detection of the referee is subsequently performed. The uniform of the referee basically has a color based on white or black in many cases, so that in the embodiment of the present invention, the frame image is first gray-scaled (S15), and "white" having the highest luminance is identified from the gray-scaled image, and the uniform of the referee is detected (S16). Once the referee can be detected, similar to the detection processing of the boxers, noise processing of the boundary between the referee and the background appearing in the frame image is performed (S17), and the definition of a rectangle surrounding the entire referee is completed (S18).

Here, the uniform of the referee does not necessarily have to be identified from the gray-scaled frame image. For example, similar to the detection of the boxers' uniforms, the uniform color of the referee stipulated in the competition rules may be stored in advance in the storage unit, and the uniform color stored in the storage unit may be compared with the color in the frame image to identify the uniform of the referee.

Further, the boxers and the referee do not necessarily have to be defined as rectangles in the person detection in the detection unit 21. The definition as rectangles is an example, and the definition of the detected persons can be appropriately selected from known methods.

The inter-rectangle distance measurement unit 22 has a function of measuring the distance between the rectangles defined for each of the boxers by the detection unit 21. Specifically, the inter-rectangle distance measurement unit 22 defines center coordinates of the first rectangle B1 and the second rectangle B2 of the two fighting boxers in a plurality of frame images captured by the imaging device 10. The inter-rectangle distance measurement unit 22 then measures the distance between the center coordinates and defines a video having the longest inter-rectangle distance as the best angle.

That is, the video having the longest inter-rectangle distance of the boxers is one in which there is little overlap between the boxers and the boxers appear side by side, and has the composition that the movement of each boxer can be seen best, and such a video is defined as the best angle in the present invention. Therefore, the imaging device that outputs the video having the longest inter-rectangle distance of the boxers is selected as an imaging device that outputs the best angle video.

However, when the referee appears in the selected frame image, the relative positional relationship between the referee and the boxers needs to be considered. Therefore, in consideration of the relative positional relationship between the boxers and the referee, the inter-rectangle distance measurement unit 22 selects videos in which the boxers and the referee do not overlap with each other or videos in which the boxers are positioned in front of the referee from among the output videos, and determines a video having the longest inter-rectangle distance of the boxers among these videos as the best angle. This makes it possible to prevent the video in which the movement(s) of the boxer(s) is/are obstructed by the referee from being erroneously determined as the best angle.

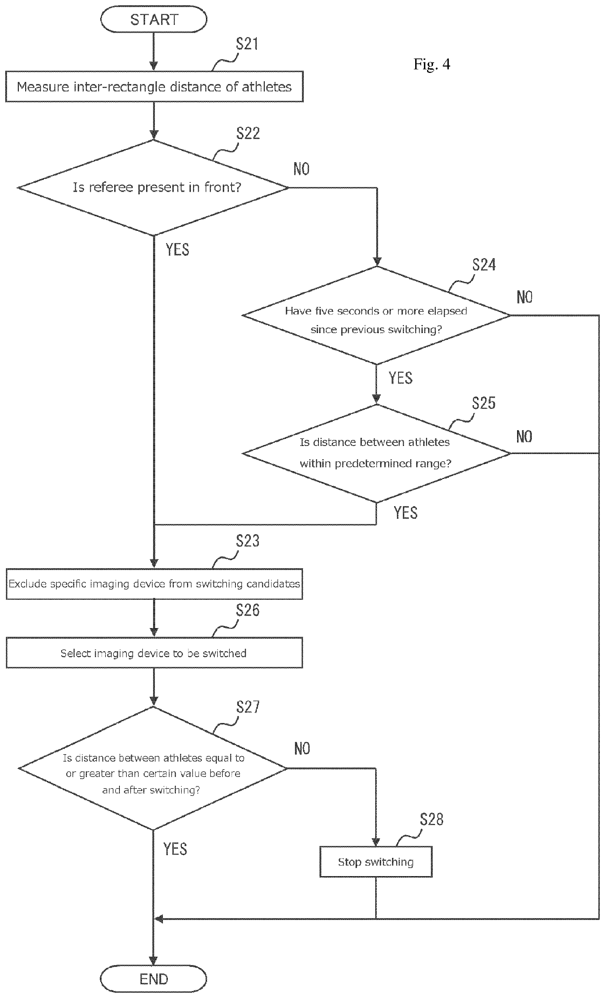

FIG. 4 is a chart showing a processing flow by the switching determination unit 20. First, the inter-rectangle distance of the boxers in the current frame image captured by the imaging device 10 is measured (S21), and the measurement result is stored in the storage unit. Next, a determination is made as to whether or not the referee is present in front of the boxer(s) (S22). As a result of the determination in S22, if the referee is present in front of the boxer(s), it is difficult for the viewers to confirm the fighting situation of the boxers. Thus, it is determined that the imaging device 10 needs to be switched and the processing moves onto S23.

On the other hand, if it is determined that the referee is not present in front of the boxer(s) as a result of the determination in S22, a determination is made as to whether or not five seconds or more have elapsed since the previous switching (S24) in order to further determine whether or not the imaging device 10 needs to be switched.

If it is determined in S24 that five seconds or more have elapsed since the previous switching, it is determined that the imaging device 10 needs to be switched because the video from the same angle has continued for a certain period of time, and the processing moves onto S25. On the other hand, if it is within five seconds from the previous switching, the video captured by the current imaging device 10 is maintained, and the processing flow is terminated.

Note that the elapsed time from the previous switching of the video, which is the determination condition in S24, does not necessarily have to be set to five seconds, and can be arbitrarily set.

If more than five seconds have passed since the previous switching in S24, the processing moves onto S25 and a determination is made as to whether or not the inter-rectangle distance of the boxers is within a predetermined range. That is, in S25, if the distance between the boxers is short based on the inter-rectangle distance measured in S21, the video results in the boxers overlapping with each other, making it difficult for the viewers to understand the fighting situation, so that it is determined that the imaging device 10 needs to be switched, and the processing moves onto S23.

On the other hand, if the boxers are separate from each other by a predetermined distance or if the boxers are fighting at an extremely close range, the current video is maintained and the processing flow is terminated. Here, the reason why the video captured by the current imaging device 10 is maintained when the boxers are fighting at a close range is that videos result in the boxers overlapping with each other in all the imaging devices 10 and improvement in visibility by switching cannot be expected. Note that the distance between the boxers for the determination in S25 can be arbitrarily set.

If it is determined in S22 and S25 that the imaging device 10 needs to be switched, the processing moves onto S23. Then, specific imaging devices 10 are excluded from the switching candidates in S23. Specifically, among the frame images output by the imaging devices 10, the imaging device 10 that outputs a frame image in which the rectangle of one of the boxers is not detected or a frame image in which neither of the boxers is detected and the imaging device 10 that outputs a frame image in which the referee is detected in front of the boxer(s) are excluded from the switching candidate imaging devices 10.

Then, moving onto S26, a determination is made as to whether or not the inter-rectangle distance of the boxers is equal to or greater than a certain value in the current frame image and the switched frame image from among the frame images output by the imaging devices 10 other than the imaging devices 10 excluded in S23 (S27). More specifically, a determination is made as to whether or not the difference between an average value of the inter-rectangle distance of the boxers for the past one second and an average value of the inter-rectangle distance of the boxers in the present is equal to or greater than a predetermined value, and the imaging device 10 that outputs a frame image having the longest inter-rectangle distance of the boxers is selected as the imaging device to be switched next.

Then, if it is determined in the determination of S27 that the distance between the boxers is equal to or greater than the certain value, switching to a specific imaging device 10 is performed, and if the distance between the boxers is less than the certain value, the switching is stopped and the processing flow is terminated.

3 Control Unit

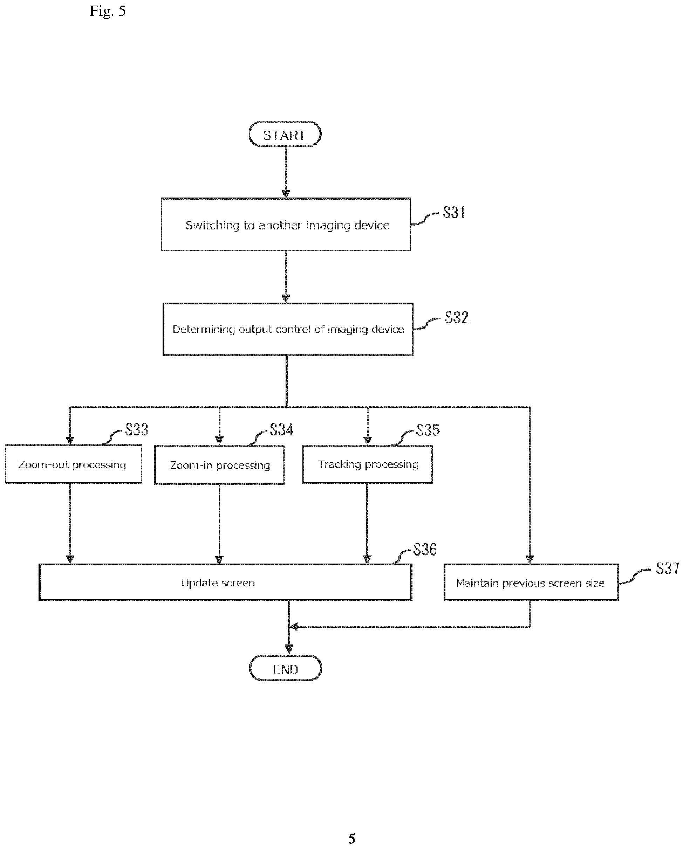

Next, control processing by the control unit 30 will be described with reference to the flow chart of FIG. 5. The control unit 30 has a function of instructing the switched imaging device 10 on output control of the video if the imaging device 10 that outputs the best angle video is selected by the switching determination unit 20 and the imaging device 10 is switched (S31).

In the output control of the video, the screen size is compared with the rectangles detected in the detection unit 21 in the output video of the switched imaging device 10, and a determination is made as to which of the zoom-out processing, the zoom-in processing, the tracking processing, and the maintenance processing of maintaining the previous screen size to be performed (S32).

First, regarding the zoom-out processing (S33) and the zoom-in processing (S34), the output video by the imaging device 10 before switching is compared with the output video by the imaging device 10 after switching, and if the output video after switching displays the boxers large with respect to the output screen size, the zoom-out processing is performed, and conversely if it displays the boxers small with respect to the screen size, the zoom-in processing is performed, and the size of the boxers is adjusted to be appropriate with respect to the screen size.

In the determination of the zoom-out processing and the zoom-in processing, which processing to be performed by the variable threshold processing is determined based on the width of the rectangles detected by the detection unit 21. Specifically, based on threshold functions defined by the following expressions (1) and (2), if the ratio of the width of the rectangles of the boxers to the screen frame of the frame image is smaller than the value of the expression (1), which is the threshold function for the zoom-out processing, the zoom-out processing is performed, and if it is larger than the value of the expression (2), which is the threshold function for the zoom-in processing, the zoom-in processing is performed. Note that w in the expressions (1) and (2) is the width of the rectangles of the boxers detected by the detection unit 21.

$$26064 \times w^{\wedge}(-1.936) + 1.1 \qquad (1)$$

$$3500.7 \times w^{\wedge}(-1.465) + 1.25 \qquad (2)$$

Here, the zoom-out processing and the zoom-in processing do not necessarily have to be determined based on the threshold functions of the expressions (1) and (2) described above, and the determination criterion can be changed as appropriate.

Next, the tracking processing (S35) will be described. First, the center coordinates of the third rectangle B3 surrounding the two fighting boxers in the frame image captured by the imaging device 10 are defined. The deviation amount between the center coordinates and the center position of the frame image is then calculated. If the deviation amount is equal to or greater than a predetermined value, it is determined that the boxers are shown in a position deviated from the center position of the frame image, and a pan or tilt tracking processing is instructed to the imaging device 10 so that the center coordinates of the third rectangle B3 match the center position of the frame image.

Here, the deviation amount between the center coordinates of the third rectangle B3 and the center position of the frame image does not necessarily have to be calculated in the determination of the tracking processing. For example, a midpoint of a straight line connecting the center coordinates of the first rectangle B1 and the center coordinates of the second rectangle B2 may be defined to calculate the deviation amount between the midpoint and the center position of the frame image.

Further, the tracking processing is basically constant speed tracking, but constant acceleration tracking in which tracking is at an accelerated rate may be performed according to the state of the boxers. For example, in boxing, the boxers are not always moving on the ring, and sometimes stop their movements on the spot to check each other. When tracking the movements of the boxers from such a stationary state, the initial movement of tracking by the imaging device 10 is controlled with constant acceleration, thereby realizing camera work that will not give a sense of incongruity to the viewers.

If the zoom-in processing, the zoom-out processing, and the tracking processing are performed based on the relationship between the screen size of the frame image and the rectangles detected by the detection unit 21 as described above, the screen is updated (S36), and the updated video is output from the output unit 40. On the other hand, if the control by the control unit 30 is not necessary before and after the switching of the imaging device 10, the previous screen size is maintained as it is (S37).

4 Output Unit

After the imaging device 10 to be switched is selected by the switching determination unit 20 and control over the imaging device 10 is executed by the control unit 30, the video captured by the imaging device 10 is output by the output unit 40.

The imaging system, the imaging program, and the imaging method according to the embodiment of the present invention have been described above. However, the technical scope of the present invention is not limited to the foregoing embodiment, and various inventions can be configured by appropriate combinations of a plurality of components disclosed in the foregoing embodiment without departing from the gist of the present invention. For example, the present invention can be applied not only to sports relay broadcasts of combat sports including boxing but also to various sports relay broadcasts such as ball games, swimming, motor sports, and further horse racing in which animals are the main characters, and in that case, the detection unit 21 detects automobiles or animals that are main characters of each competition as the subjects and determines the best angle.

As described above, the imaging system, the imaging program, and the imaging method according to the present invention can automatically switch between videos captured by a plurality of cameras and constantly output the best angle video to the viewers.

Reference Signs List

1: Imaging system
10, 10a, 10b, 10c, 10d: Imaging Device
20: Switching Determination Unit
21: Detection unit
22: Inter-rectangle distance measurement unit
23: Uniform color determination unit
24: Moving body detection unit
30: Control Unit
40: Output Unit
B1: First rectangle
B2: Second rectangle
B3: Third rectangle
C: Color image
G: Frame image
M1: First mask image
M2: Second mask image
R: Ring

**Claims**

1. An imaging system comprising:

   a plurality of imaging devices that image the same subject from different viewpoints at the same timing;
   a switching determination unit that determines a best angle from among videos captured by the plurality of imaging devices and selects an imaging device that outputs a video of the best angle;
   a control unit that instructs the imaging device selected by the switching determination unit to execute at least one of control processings of zoom-out processing from the subject, zoom-in processing to the subject, tracking processing of the subject, and maintenance processing of maintaining a previous screen size; and
   an output unit that outputs a video captured by the imaging device controlled based on the control processing by the control unit.

2. The imaging system according to claim 1, wherein the switching determination unit has:

   a detection unit that uses a plurality of moving bodies competing in a stadium as the subjects and detects each of the subjects as a rectangle surrounding each of the subjects from each frame image of the video obtained by the imaging device; and
   an inter-rectangle distance measurement unit that measures an inter-rectangle distance, which is a distance between center coordinates of the rectangles of the moving bodies that are the subjects detected by the detection unit, and determines the best angle based on the inter-rectangle distance.

3. The imaging system according to claim 2, wherein the detection unit detects at least two athletes competing in a stadium and at least one referee giving a decision for establishing the competition of the athletes as the subjects, and the switching determination unit determines, as the best angle, a video in which the inter-rectangle distance is the longest from among videos in which the athletes and the referee do not overlap with each other or videos in which the athletes are positioned in front of the referee.

4. The imaging system according to claim 3, wherein the detection unit has a uniform color determination unit that determines uniform colors of the athletes in a frame image based on color information, and detects a specific athlete from among the subjects based on a determination result by the uniform color determination unit.

5. The imaging system according to claim 2 or claim 3, wherein the detection unit has a moving body detection unit that identifies a subject by a background subtraction method or a frame subtraction method, and
detects the subject identified by the moving body detection unit as a rectangle surrounding the subject.

6. The imaging system according to claim 2, wherein the zoom-in processing and the zoom-out processing by the control unit are configured such that when a ratio of a width of the rectangle of the subject detected by the detection unit to a width of a specific frame is larger than a value defined by a predetermined first threshold function, the zoom-in processing is performed and when the ratio is smaller than a value defined by a predetermined second threshold function, the zoom-out processing is performed.

7. The imaging system according to claim 2, wherein the tracking processing by the control unit is configured such that tracking is performed at a constant speed or at a constant acceleration so that a midpoint connecting respective center coordinates of one of the rectangles of the subjects detected by the detection unit and the other rectangle substantially coincides with a center of the frame image.

8. An imaging program for causing a computer to execute:

a step of receiving a plurality of videos of the same subject imaged from different viewpoints at the same timing;
a step of determining a best angle from among the plurality of videos and selecting an imaging device that outputs a video of the best angle;
a step of instructing the imaging device that outputs the best angle video to execute at least one of control processings of zoom-out processing from the subject, zoom-in processing to the subject, tracking processing of the subject, and maintenance processing of maintaining a previous screen size; and
a step of outputting a video captured by the imaging device controlled based on the control processing.

9. The imaging program according to claim 8, wherein the step of selecting an imaging device that outputs the best angle video includes:

a step of using a plurality of moving bodies competing in a stadium as subjects and detecting each of the subjects as a rectangle surrounding each of the subjects from each frame image of the video obtained by the imaging device;
a step of measuring an inter-rectangle distance, which is a distance between center coordinates of the rectangles of the moving bodies that are the subjects; and
a step of determining the best angle based on the inter-rectangle distance.

10. The imaging program according to claim 9, wherein the step of selecting an imaging device that outputs the best angle video further includes a step of detecting at least two athletes competing in a stadium and at least one referee giving a decision for establishing the competition of the athletes as the subjects, and
the step of determining, as the best angle, a video in which the inter-rectangle distance is the longest includes a step of determining, as the best angle, a video in which the inter-rectangle distance is the longest from among videos in which the athletes and the referee do not overlap with each other or videos in which the athletes are positioned in front of the referee.

11. The imaging program according to claim 10, wherein the step of detecting at least two athletes competing in a stadium includes:

a step of determining uniform colors of the athletes in a frame image based on predetermined color information; and
a step of performing noise processing on the frame image by morphological transformation.

12. The imaging program according to claim 10, wherein the step of detecting the referee giving a decision for establishing the competition of the athletes includes:

a step of gray-scaling the frame image; and
a step of performing noise processing on the frame image by morphological transformation.

13. An imaging method comprising:

a step of receiving a plurality of videos of the same subject imaged from different viewpoints at the same timing by imaging devices arranged at different positions;
a step of determining a best angle from among the plurality of videos and selecting an imaging device that outputs a video of the best angle;
a step of instructing the imaging device that outputs the best angle video to execute at least one of control processings of zoom-out processing from the subject, zoom-in processing to the subject, tracking processing of the subject, and maintenance processing of maintaining a previous screen size; and

a step of outputting a video captured by the imaging device controlled based on the control processing.

Fig. 1

Fig. 2

Frame image

S11
Moving body detection

**Detection of Athlete**

S12
Extract uniform color

S13
Noise processing
(morphological transformation)

S14
Detect rectangle of each athlete

**Detection of Referee**

S15
Gray-scaling

S16
Detect referee's wear
(threshold processing)

S17
Noise processing
(morphological transformation)

S18
Detect rectangle

Fig. 3

Fig. 4

START

S21

Measure inter-rectangle distance of athletes

S22

Is referee present in front? —NO→

YES

S24

Have five seconds or more elapsed since previous switching? —NO→

YES

S25

Is distance between athletes within predetermined range? —NO→

YES

S23

Exclude specific imaging device from switching candidates

S26

Select imaging device to be switched

S27

Is distance between athletes equal to or greater than certain value before and after switching? —NO→

YES

S28

Stop switching

END

Fig. 5

```
                        ┌─────────┐
                        │  START  │
                        └────┬────┘
                             │
                             ▼
        ┌──────────────────────────────────────────┐
        │     Switching to another imaging device   │──── S31
        └──────────────────────┬───────────────────┘
                               │
                               ▼
        ┌──────────────────────────────────────────┐
        │   Determining output control of imaging device │──── S32
        └──────────────────────┬───────────────────┘
                               │
      ┌──────────────┬─────────┴────────┬───────────────────────┐
      ▼              ▼                  ▼                        │
  ┌────────┐     ┌────────┐        ┌──────────┐                 │
  │ S33    │     │ S34    │        │ S35      │                 │
  ├────────┤     ├────────┤        ├──────────┤                 │
  │Zoom-out│     │Zoom-in │        │Tracking  │                 │
  │process.│     │process.│        │processing│                 │
  └───┬────┘     └───┬────┘        └────┬─────┘                 ▼
      │              │                  │          ┌──────────────────────────┐
      ▼              ▼                  ▼          │ S37                      │
  ┌────────────────────────────────────────────┐  │ Maintain previous        │
  │ S36                                         │  │ screen size              │
  │            Update screen                    │  └────────────┬─────────────┘
  └─────────────────────┬──────────────────────┘               │
                        │◄──────────────────────────────────────┘
                        ▼
                   ┌─────────┐
                   │   END   │
                   └─────────┘
```

5

# EP 4 507 290 A1

| | | | |
|---|---|---|---|
| **INTERNATIONAL SEARCH REPORT** | | International application No. | |
| | | **PCT/JP2023/028050** | |

**A. CLASSIFICATION OF SUBJECT MATTER**

*H04N 5/222*(2006.01)i; *H04N 5/268*(2006.01)i; *H04N 23/69*(2023.01)i
FI: H04N5/222; H04N23/69; H04N5/268

According to International Patent Classification (IPC) or to both national classification and IPC

**B. FIELDS SEARCHED**

Minimum documentation searched (classification system followed by classification symbols)

H04N5/222-5/257; H04N5/262-/5/28; H04N23/00; H04N23/40-23/76; H04N23/90-23/959

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0053493 A (PIXELSCOPE INC.) 29 April 2022 (2022-04-29) paragraphs [0039]-[0107], fig. 1-6 | 1, 8, 13 |
| A | JP 2009-278437 A (SHARP CORP.) 26 November 2009 (2009-11-26) entire text, all drawings | 1-13 |
| A | KR 10-2107055 B1 (KONKUK UNIVERSITY INDUSTRIAL COOPERATION CORP.) 06 May 2020 (2020-05-06) entire text, all drawings | 1-13 |
| A | JP 2017-112431 A (CANON INC.) 22 June 2017 (2017-06-22) entire text, all drawings | 1-13 |
| A | JP 2005-167517 A (OLYMPUS CORP.) 23 June 2005 (2005-06-23) entire text, all drawings | 1-13 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **22 September 2023** | **10 October 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

17

INTERNATIONAL SEARCH REPORT
Information on patent family members

International application No.

**PCT/JP2023/028050**

| Patent document cited in search report | | | Publication date (day/month/year) | Patent family member(s) | | | Publication date (day/month/year) |
|---|---|---|---|---|---|---|---|
| KR | 10-2022-0053493 | A | 29 April 2022 | WO | 2022/086202 | A1 | |
| JP | 2009-278437 | A | 26 November 2009 | (Family: none) | | | |
| KR | 10-2107055 | B1 | 06 May 2020 | (Family: none) | | | |
| JP | 2017-112431 | A | 22 June 2017 | US | 2017/0171570 | A1 | |
| | | | | entire text, all drawings | | | |
| | | | | EP | 3182694 | A1 | |
| | | | | CN | 107018355 | A | |
| JP | 2005-167517 | A | 23 June 2005 | US | 2005/0117033 | A1 | |
| | | | | entire text, all drawings | | | |

Form PCT/ISA/210 (patent family annex) (January 2015)

**EP 4 507 290 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005295431 A